# EUROPEAN PATENT APPLICATION

(11) **EP 1 767 806 A2**
(43) Date of publication of application: **28.03.2007**
(21) Application number: 06253306.2
(22) Date of filing: 26.06.2006
(51) Int. Cl.: F16D 65/20, F16D 65/21

(54) **Disc brake with parking function**

(30) Priority: 22.09.2005 KR 20050088010
(71) Applicant: Mando Corporation, Pyungtaek-city, Kyunggi-do (KR)
(72) Inventor: Noh, Kang Sung, Yeongtong-gu, Suwon-si, Kyungki-do (KR)
(74) Representative: Pratt, David Martin

(57) **Abstract**

A disc brake enables a parking apparatus to be operated via actuation of an electric motor (25), thereby permitting easy operation of the parking apparatus. The disc brake comprises a piston (14) to compress a friction pad (12) used for braking of a disc (1), a caliper housing (13) to receive the piston such that the piston moves linearly therein, and having a cylinder section (15) to which a hydraulic pressure for braking is applied, an actuation shaft (23) rotatably installed within the cylinder section, and having a male screw (23b) formed thereon, a compression sleeve (24) installed within the piston to compress or release the piston while linearly moving therein by rotation of the actuation shaft, and having a female screw (24a) formed thereon to engage with the male screw of the actuation shaft, an electric motor to rotate the actuation shaft, a multi-stage reduction gear train (40) to transmit rotational force of the electric motor to the actuation shaft. The multi-stage reduction gear train has a central axis deviated from that of the electric motor, and a shaft connected with a shaft of the electric motor via a power transmission unit (60).

## Description

### CROSS-REFERENCE TO RELATED APPLICATION

This application claims the benefit under 35 U.S.A. §119 of Korean Patent Application No. 2005-0088010, filed on September 22, 2005 in the Korean Intellectual Property Office, the disclosure of which is incorporated herein by reference.

### BACKGROUND OF THE INVENTION

### 1. Field of the Invention

The present invention relates to a disc brake having a parking function, and, more particularly, to a disc brake, adapted to realize a parking function via actuation of an electric motor.

### 2. Description of the Related Art

Disc brakes having a parking function for vehicles are well known in the art. One example of the disc brakes is disclosed in Japanese Patent Laid-open Publication No. 2002-235779. The disc brake of the publication has a typical hydraulic brake function realized in such a way that a hydraulic pressure is created through operation of a driver stepping on a brake pedal, and causes a piston to compress friction pads on a disc, thereby achieving braking of the vehicle, and a parking function realized in such a way that, when the driver pulls a parking lever near a driver's seat to park the vehicle, a parking apparatus assembled to the disc brake is operated, thereby achieving the braking of the vehicle.

The parking apparatus of the disc brake comprises an operation lever connected with the parking lever near the driver's seat via a cable, a cam-shaft coupled to the operation lever, a rod moving linearly in a direction of compressing the piston according to behavior of the cam-shaft, and an automatic gap adjustment unit positioned between the piston and the rod. The parking apparatus is operated in such a way that, when the driver pulls the parking lever, the operation lever is rotated, and causes the cam-shaft to rotate corresponding to the behavior of the operation lever and to compress the rod to move linearly such that the piston is compressed by the rod, and in turn, compresses the friction pad, thereby enabling the braking of the vehicle.

With the conventional parking apparatus of the disc brake, it is necessary for the driver to forcibly pull the parking lever when parking the vehicle, making it difficult and inconvenient to handle. Furthermore, the conventional parking apparatus requires the use of the parking lever, which occupies a large space within the vehicle, and requires a large operating stroke, thereby restricting use of an interior space of the vehicle.

### SUMMARY OF THE INVENTION

It is an object of the present invention to provide a disc brake, which enables a parking apparatus to be operated via actuation of an electric motor, thereby permitting easy operation of the parking apparatus.

It is another object of the present invention to provide the disc brake which employs a small electric motor to realize a parking function.

Additional aspects, objects and/or advantages of the invention will be set forth in part in the description which follows and, in part, will be apparent from the description, or may be learned by practice of the invention.

In accordance with one aspect of the present invention, there is provided a disc brake with a parking function, comprising: a piston to compress a friction pad used for braking of a disc; a caliper housing to receive the piston such that the piston moves linearly therein, and having a cylinder section to which a hydraulic pressure for braking is applied; an actuation shaft rotatably installed within the cylinder section, and having a male screw formed thereon; a compression sleeve installed within the piston to compress or release the piston while linearly moving therein by rotation of the actuation shaft, and having a female screw formed thereon to engage with the male screw of the actuation shaft; an electric motor to rotate the actuation shaft; a multi-stage reduction gear train to transmit rotational force of the electric motor to the actuation shaft, the multi-stage reduction gear train having a central axis deviated from that of the electric motor, and a shaft connected with a shaft of the electric motor via a power transmission unit.

The multi-stage reduction gear train may comprise a plurality of planetary gear units serially connected with each other.

Each of the planetary gear units may comprise a sun gear connected with a driving source, a plurality of planetary gears engaging with an outer periphery of the sun gear, an internal gear engaging with outer surfaces of the planetary gears, and a carrier installed in the gear unit to rotate coaxially with the sun gear while rotatably supporting the planetary gear to output rotational power.

The sun gears of the respective planetary gear units may be disposed coaxial with the actuation shaft.

The electric motor may be positioned at a lateral side of the multi-stage reduction gear train, and have the central axis of the electric motor disposed in parallel to that of the multi-stage reduction gear train.

The power transmission unit may comprise a driving gear coupled to the shaft of the electric motor, a driven gear coupled to the shaft of the multi-stage reduction gear train, an intermediate gear connecting the driving gear with the driven gear, and a frame to support a shaft of the intermediate gear while maintaining a distance between the shafts of the driving gear and the driven gear.

The disc brake may further comprise an outer housing to enclose the multi-stage reduction gear train, the electric motor, and the power transmission unit, wherein the intermediate gear comprises a manual adjustment shaft extending from the intermediate gear to an outside of the outer housing such that the braking is released by manually rotating the intermediate gear.

The manual adjustment shaft may comprise a tool coupling part to which a tool for rotating the manual adjustment shaft is coupled.

The power transmission unit may allow rotation of the electric motor to be transmitted at a reduced speed to the multi-stage reduction gear train.

When the electric motor is not actuated, rotation of the actuation shaft may be restricted by a reduction ratio of the multi-stage reduction gear train to maintain the braking.

The disc brake may further comprise tapered engagement surfaces respectively formed on an inner surface of the piston and an outer surface of the compression sleeve to engage with each other, and a gap adjustment spring interposed between the inner surface of the piston and the outer surface of the compression sleeve to adjust a gap between the friction pad and the disc by forcing the compression sleeve to move in a contact direction of the engagement surfaces.

The disc brake may further comprise a support spring installed within the cylinder to restrict an axial movement of the actuation shaft by supporting the actuation shaft, and a spring support member secured in the cylinder section to support the support spring.

The male screw of the actuation shaft and the female screw of the compression sleeve may provide a clearance to allow movement of the piston for a predetermined distance in a direction of releasing the braking when a hydraulic pressure compressing the piston is released.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a cross-sectional view illustrating the configuration of a disc brake in accordance with one embodiment of the present invention;
FIG. 2 is a perspective view illustrating the configuration of a parking apparatus of the disc brake in accordance with the embodiment of the present invention;
FIG. 3 is an exploded perspective view illustrating the parking apparatus of the disc brake in accordance with the embodiment of the present invention; and

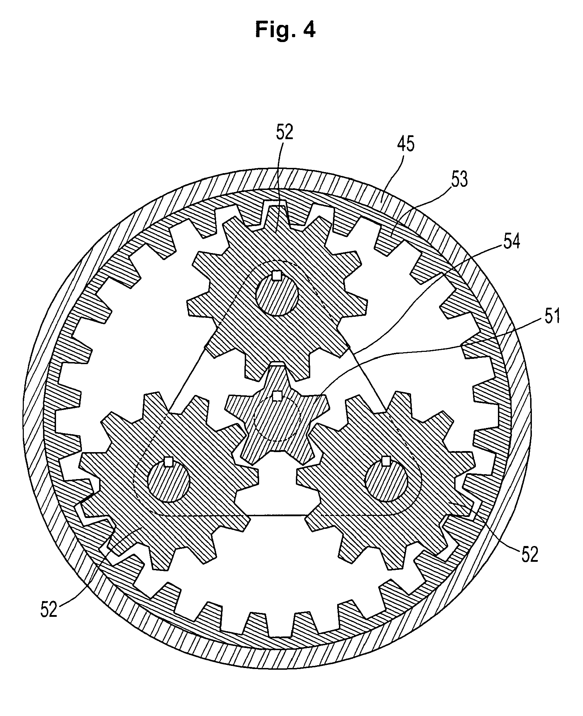

FIG. 4 is a cross-sectional view taken along line □-□' of FIG. 1.

### DETAILED DESCRIPTION OF THE PREFERRED EMBODIMENTS

Reference will now be made in detail to the embodiments of the present invention, examples of which are illustrated in the accompanying drawings. The embodiments are described below to explain the present invention by referring to the figures.

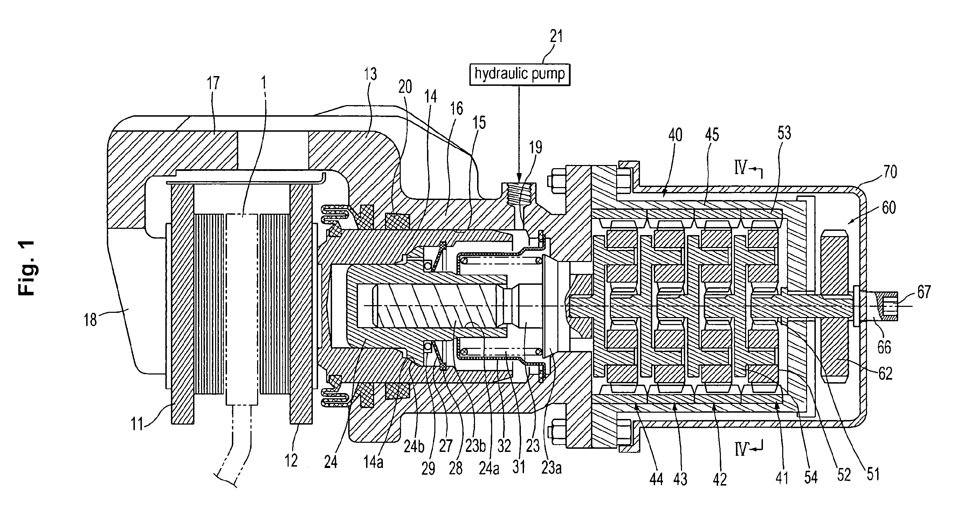

Referring to FIG. 1, a disc break according to the present invention comprises first and second friction pads 11 and 12 disposed at both sides of a disc 1 rotating along with wheels, a caliper housing 13, and a piston 14 which compress the friction pads 11 and 12.

The caliper housing 13 comprises a body 16 having a cylinder section 15 formed therein to receive the piston 14 such that the piston 14 moves linearly therein, a connecting section 17 extending from the body 16 towards a rear side of the first friction pad 11 opposite to the body 16, and a supporting section 18 extending from the connecting section 17 to support the rear side of the first friction pad 11. The body 16 is formed with an oil port 19 through which brake oil flows into the cylinder section 15 to apply a hydraulic pressure for braking, and has a packing 20 positioned between an outer surface of the piston 14 and an inner surface of the cylinder section 15 to prevent leakage of the oil.

Thus, when the hydraulic pressure for braking is applied to the interior of the cylinder 15, the piston 14 moves towards, and compresses the second friction pad 12, while the caliper housing 13 is operated opposite to the piston such that the supporting section 18 compresses the first friction pad 11, thereby enabling braking of the disc 1.

The hydraulic pressure for braking may be a hydraulic pressure from a master cylinder (not shown) of a typical brake system, or a hydraulic pressure by activation of a hydraulic pump 21, which is applied to a vehicle with an anti-lock brake system (ABS) or a brake traction control system (BTCS) to generate the hydraulic pressure.

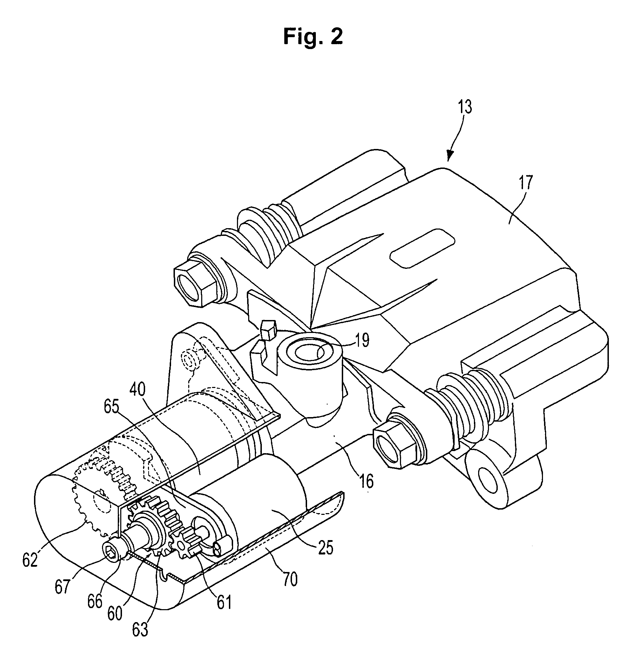

In addition, the disc brake of the present invention comprises a parking apparatus which is used for the braking of the disc 1 when parking a vehicle. Referring to FIGS. 1 and 2, the parking apparatus comprises an actuation shaft 23 rotatably installed within the cylinder section 15 of the caliper housing 13, a compression sleeve 24 installed within the piston 14 to compress or release the piston 14 while linearly moving by rotation of the actuation shaft 23, an electric motor 25 to rotate the actuation shaft 23, a multi-stage reduction gear train 40 to transmit rotational force of the electric motor 25 to the actuation shaft 23, and a power transmission unit 60 to connect a shaft of the multi-stage reduction gear train with a shaft of the electric motor 25.

The actuation shaft 23 is formed with a supporting part 23a rotatably supported at a rear end of the cylinder section 15, and a male screw 23b extending for a predetermined length from the supporting part 23a towards the inner center of the piston 14. The compression sleeve 24 has a cylindrical shape, and is formed with a female screw 24a formed on an inner surface of the compression sleeve 24 and engaging with the male screw 23a of the actuation shaft 23 such that the compression sleeve 24 advances or retreats axially by rotation of the actuation shaft 23. Tapered engagement surfaces 24b and 14a are respectively formed on an outer surface of the compression sleeve 24 and on an inner surface of the piston 14 to engage with each other. With this structure, when the actuation shaft 23 is rotated in a clockwise or counterclockwise direction, the compression sleeve 24 moves linearly, and compresses the piston 14, thereby enabling the braking of the disc.

A gap adjustment spring 27 is installed between the outer surface of the compression sleeve 24 and the inner surface of the piston 14 to compress the compression sleeve 24 such that the engagement surface 24b of the compression sleeve 24 is continuously kept in contact with the engagement surface 14a of the piston 14. The gap adjustment spring 27 is composed of an elastic wave washer. The gap adjustment spring 27 has an outer periphery supported on the inner surface of the piston 14 by a support ring 28, and an inner periphery supported on the outer surface of the compression sleeve 24 via bearings 29.

When the piston 14 is moved towards the disc 1 due to wear of the friction pads 11 and 12, causing a gap to be created between the engagement surfaces 14a and 24b, the gap adjustment spring 27 compresses the compression sleeve 24, and enables the contact between the engagement surfaces 14a and 24b to be maintained. In other words, when the braking operation is performed by means of the hydraulic pressure, the actuation shaft 23 is not rotated, and the piston 14 moves forward. At this point, when the piston 14 is moved towards the disc 1 due to the wear of the friction pads 11 and 12, causing the gap to be created between the engagement surfaces 14a and 24b of the piston 14 and the compression sleeve 24, the gap adjustment spring 27 forces the compression sleeve 24 to move towards the piston 14 so that the engagement surfaces 14a and 24b can be maintained in the contact state, thereby allowing the gap between the friction pads 11 and 12 and the disc 1 to be adjusted.

While the gap adjustment is performed, the engagement surfaces 14a and 24b are in a separated state, and the actuation shaft 23 is not rotated. Thus, when the compression sleeve 24 is compressed by the gap adjustment spring 27, the compression sleeve 24 is moved towards the piston 14 while rotating therein. In order to allow gap adjustment to be performed as described above, it is desirable that the female screw 24a of the compression sleeve 24 and the male screw 23b of the actuation shaft 23 are composed of multiple threads for easy engagement and disengagement therebetween. According to the embodiment, each of the female screw 24a and the male screw 23b is composed of 4-line threads. In addition, the female screw 24a of the compression sleeve 24 and the male screw 23b of the actuation shaft 23 provide a clearance of a predetermined distance therebetween to allow movement of the piston 14 in a direction of releasing the braking when the hydraulic pressure for braking is released.

The cylinder section 15 is provided with a support spring 31 to support the supporting part 23a of the actuation shaft 23, and a cap-shaped spring support member 32 to support the support spring 31 in order to restrict the axial movement of the actuation shaft 23. The spring support member 32 is secured in the cylinder section 15.

The multi-stage reduction gear train 40 comprises a cylindrical casing 45 coupled to the rear end of the caliper housing 13, and a plurality of planetary gear units 41, 42, 43 and 44 received within the casing 45.

The planetary gear units 41, 42, 43 and 44 are composed of first to fourth planetary gear units 41, 42, 43 and 44 serially connected from the power transmission unit 60 connected with the electric motor 25 to the actuation shaft 23 in order to obtain a large reduction ratio through multi-stage reduction.

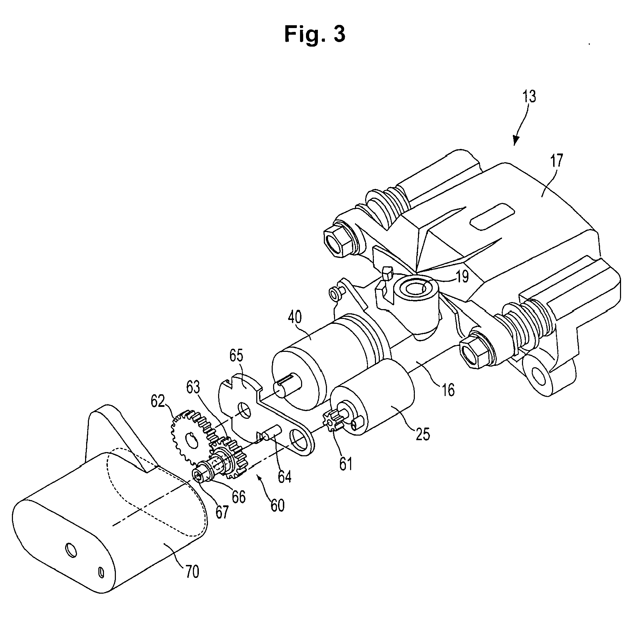

As shown in FIGS. 1 and 3, each of the planetary gear units 41, 42, 43 and 44 comprises a sun gear 51 connected with a driving source, a plurality of planetary gears 52 engaging with an outer periphery of the sun gear 51, an internal gear 53 engaging with outer surfaces of the planetary gears 52 while being secured inside a carrier 54, and the carrier 54 installed therein to rotate coaxially with the sun gear 51 while rotatably supporting the planetary gears 52 to output rotational power.

The power transmission unit 60 is connected with the sun gear of the first planetary gear unit 41, which has the central axis of its carrier 54 connected with the sun gear of the second planetary gear unit 42. The planetary gear units 41, 42, 43 and 44 are serially connected with each other in this manner, resulting in connection of the carrier of the fourth planetary gear unit 44 with the actuation shaft 23. The internal gears of the respective planetary gear units 41, 42, 43 and 44 may be formed as an integral component, or formed as separate components.

With such a multi-stage reduction gear train 40, it is possible to rotate the actuation shaft 23 with a great force while allowing size reduction of the electric motor 25 as a driving source, and to maintain a brake state of the vehicle by restricting the rotation of the actuation shaft 23 via a large reduction ratio of the multi-stage reduction gear train 40 when the electric motor 25 is stopped after performing the braking operation for parking of the vehicle. In addition, the sun gears of the respective planetary gear units 41, 42, 43 and 44 are disposed coaxial with the actuation shaft 23, thereby minimizing loss in power transmission while reducing the size of the electric motor.

The electric motor 25 is installed at a lateral side of the multi-stage reduction gear train 40 with its central axis disposed in parallel to the central axis of the electric motor 25, as shown in FIG. 2.

Referring to FIGS. 2 and 3, the power transmission unit 60 comprises a driving gear 61 coupled to the shaft of the electric motor 25, a driven gear 62 coupled to the shaft of the multi-stage reduction gear train 40, an intermediate gear 63 interposed between the driving gear 61 and the driven gear 62 to connect the driving gear 61 with the driven gear 62. The power transmission unit 60 further comprises a frame 65 to support a shaft 64 of the intermediate gear 63 while maintaining distances between the shafts of the driving gear 61, the intermediate gear 63, and the driven gear 62. The power transmission unit 60 is preferably constituted such that the number of gears is gradually increased from the driving gear 61 to the driven gear 62 so as to allow the rotation of the electric motor 25 to be transmitted at a reduced speed to the multi-stage reduction gear train 40.

As such, when the electric motor 25 is disposed at the lateral side of the multi-stage reduction gear train 40 such that the central axis of the electric motor 25 is disposed in parallel to the central axis of the multi-stage reduction gear train, the disc brake can be reduced in its entire length, and thus can be easily installed in the vehicle with a limited installation space.

An outer housing 70 encloses the multi-stage reduction gear train 40, the electric motor 25, and the power transmission unit 60 from a rear side thereof. In addition, the intermediate gear 63 of the power transmission unit 60 is provided with a manual adjustment shaft 66 extending from the intermediate gear 63 to an outside of the outer housing 70. The manual adjustment shaft 66 is provided in preparation of non-operation of the electric motor 25 due to malfunction of the electric motor 25 or discharge of a battery, and is rotated directly by a user, thereby releasing the braking. The manual adjustment shaft 66 is provided with a tool coupling part 67 to which tools, such as a driver or a wrench, are coupled so as to allow the user to easily rotate the manual adjustment shaft 66.

Braking of the disc brake for parking a vehicle will be described as follows.

When a driver presses any one of operation switches near a driver's seat for parking of the vehicle, an electric motor 25 begins to rotate. Rotation of the electric motor 25 is reduced in speed through a power transmission unit 60 and a multi-stage reduction gear train 40, and rotates an actuation shaft 23 with a great force. When the actuation shaft 23 is rotated, a compression sleeve 24 is moved in an axial direction, and compresses a piston 14, thereby enabling the braking of the vehicle.

After the vehicle is braked, the electric motor 25 is stopped. According to the present invention, since the multi-stage reduction gear train 40 has a large reduction ratio, the actuation shaft 23 is prevented from being rotated. Thus, this brake state can be maintained so long as the electric motor 25 is not driven again.

If the driver wants to release the brake state, he or she pushes down an associated operation switch to release the brake state. At this time, since both the electric motor 25 and the actuation shaft 23 are rotated in an opposite direction to the case of braking the vehicle, the compression sleeve 24 releases compression of the piston 14, thereby releasing the braking.

In addition, according to the present invention, the parking apparatus may be operated in a state wherein a hydraulic pressure is applied to a cylinder section 15 of a caliper housing 13 (in a state wherein the braking is achieved via the hydraulic pressure). This structure is prepared for the case where a vehicle is prepared with a hydraulic pump 21 for the braking operation. In this case, the parking apparatus is operated in a state wherein the piston 14 is compressed to achieve the braking of the vehicle. In other words, when the operation switch is pushed down by the driver, the hydraulic pump 12 is operated at first to achieve the braking of the vehicle, and the parking apparatus is then operated. Accordingly, the braking operation for the parking can be performed without applying a great load to the electric motor 25.

When achieving the braking of the vehicle, the compression sleeve 24 supports the piston 14, and allows the brake state of the vehicle to be maintained, even if the hydraulic pressure is released, and the operation of the electric motor 25 is stopped. As such, in the case where the brake state of the vehicle is maintained by means of the parking apparatus after performing the braking by use of the hydraulic pressure, since the electric motor 25 is not subjected to the great load, it is possible to reduce the size of the electric motor 25.

When the braking of the vehicle is not released due to malfunction of the electric motor 25 or discharge of the battery, with the braking of the vehicle achieved by means of the parking apparatus, the manual adjustment shaft 66 is rotated directly by the driver to release the braking of the vehicle.

As apparent from the above description, in the disc brake with the parking function according to the present invention, the parking apparatus is adapted to be operated via actuation of the electric motor, so that it is easily operated by a driver.

In addition, according to the present invention, the disc brake is provided with the multi-stage reduction gear train which allows rotation of the electric motor to be transmitted at a reduced speed to the actuation shaft, so that the size of the electric motor can be reduced, and braking of the vehicle can be performed by rotating the actuation shaft with a great force.

In addition, according to the present invention, the electric motor is installed at the lateral side of the multi-stage reduction gear train, thereby reducing the entire length of the disc brake, so that the electric motor can be installed in a vehicle having a limited installation space.

Furthermore, according to the present invention, the multi-stage reduction gear train has a great reduction ratio so that the actuation shaft is prevented from being rotated in a reverse direction, thereby allowing the brake state of the vehicle to be maintained even when the electric motor is stopped.

Although a few embodiments of the present invention have been shown and described, it would be appreciated by those skilled in the art that various modifications, additions and substitutions may be made in these embodiments without departing from the principle and spirit of the invention, the scope of which is defined in the claims and their equivalents.

## Claims

1. A disc brake with a parking function, comprising:
a piston to compress a friction pad used for braking of a disc;
a caliper housing to receive the piston such that the piston moves linearly therein, and having a cylinder section to which a hydraulic pressure for braking is applied;
an actuation shaft rotatably installed within the cylinder section, and having a male screw formed thereon;
a compression sleeve installed within the piston to compress or release the piston while linearly moving therein by rotation of the actuation shaft, and having a female screw formed thereon to engage with the male screw of the actuation shaft;
an electric motor to rotate the actuation shaft; and
a multi-stage reduction gear train to transmit rotational force of the electric motor to the actuation shaft, the multi-stage reduction gear train having a central axis deviated from that of the electric motor, and a shaft connected with a shaft of the electric motor via a power transmission unit.

2. The disc brake according to claim 1, wherein the multi-stage reduction gear train comprises a plurality of planetary gear units serially connected with each other.

3. The disc brake according to claim 2, wherein each of the planetary gear units comprises a sun gear connected with a driving source, a plurality of planetary gears engaging with an outer periphery of the sun gear, an internal gear engaging with outer surfaces of the planetary gears, and a carrier installed in the gear unit to rotate coaxially with the sun gear while rotatably supporting the planetary gear to output rotational power.

4. The disc brake according to claim 3, wherein the sun gears of the respective planetary gear units are disposed coaxial with the actuation shaft.

5. The disc brake according to claim 1, wherein the electric motor is positioned at a lateral side of the multi-stage reduction gear train, and has the central axis of the electric motor disposed in parallel to that of the multi-stage reduction gear train.

6. The disc brake according to claim 5, wherein the power transmission unit comprises a driving gear coupled to the shaft of the electric motor, a driven gear coupled to the shaft of the multi-stage reduction gear train, an intermediate gear connecting the driving gear with the driven gear, and a frame to support a shaft of the intermediate gear while maintaining a distance between the shafts of the driving gear and the driven gear.

7. The disc brake according to claim 6, further comprising:
an outer housing to enclose the multi-stage reduction gear train, the electric motor, and the power transmission unit,
wherein the intermediate gear comprises a manual adjustment shaft extending from the intermediate gear to an outside of the outer housing such that the braking is released by manually rotating the intermediate gear.

8. The disc brake according to claim 7, wherein the manual adjustment shaft comprises a tool coupling part to which a tool for rotating the manual adjustment shaft is coupled.

9. The disc brake according to claim 6, wherein the power transmission unit allows rotation of the electric motor to be transmitted at a reduced speed to the multi-stage reduction gear train.

10. The disc brake according to claim 1, wherein, when the electric motor is not actuated, rotation of the actuation shaft is restricted by a reduction ratio of the multi-stage reduction gear train to maintain the braking.

11. The disc brake according to claim 1, further comprising:
tapered engagement surfaces respectively formed on an inner surface of the piston and an outer surface of the compression sleeve to engage with each other; and
a gap adjustment spring interposed between the inner surface of the piston and the outer surface of the compression sleeve to adjust a gap between the friction pad and the disc by forcing the compression sleeve to move in a contact direction of the engagement surfaces.

12. The disc brake according to claim 1, further comprising:
a support spring installed within the cylinder to restrict an axial movement of the actuation shaft by supporting the actuation shaft; and
a spring support member secured in the cylinder section to support the support spring.

13. The disc brake according to claim 1, wherein the male screw of the actuation shaft and the female screw of the compression sleeve provide a clearance to allow movement of the piston for a predetermined distance in a direction of releasing the braking when a hydraulic pressure compressing the piston is released.
